# FASCICULE DE BREVET EUROPEEN

(11) **EP 1 318 186 B1**
(45) Date de publication et mention de la délivrance du brevet: **17.05.2006**
(21) Numéro de dépôt: 02292669.5
(22) Date de dépôt: 28.10.2002
(51) Int. Cl.: C10B 53/00, C10K 1/00

(54) **Procédé et installation de traitement de gaz issus de la décomposition par effet thermique d'une charge solide**
Verfahren und Vorrichtung zur Behandlung von durch thermische Zersetzung eines Feststoffzusatzes erzeugtem Gas
Process and apparatus for treating gas derived from thermal decomposition of a solid charge

(30) Priorité: 07.12.2001 FR 0115887
(43) Date de publication de la demande: 11.06.2003
(73) Titulaire: Institut Français du Pétrole, 92852 Rueil-Malmaison Cedex (FR)
(72) Inventeur: Marty, Eric, 69005 Lyon (FR)

(56) Documents cités:
- EP-A- 0 040 857
- DE-A- 3 641 535
- FR-A- 2 331 752
- FR-A- 2 804 043
- US-A- 4 146 359
- PATENT ABSTRACTS OF JAPAN vol. 1998, no. 10, 31 août 1998 (1998-08-31) & JP 10 132239 A (ISHIKAWAJIMA HARIMA HEAVY IND CO LTD), 22 mai 1998 (1998-05-22)

## Description

La présente invention se rapporte à un procédé et à une installation de traitement de gaz issus de la décomposition par effet thermique d'une charge solide pouvant contenir une fraction organique.

La charge solide pouvant éventuellement contenir une fraction organique est notamment des déchets urbains et/ou industriels, de la biomasse ou des boues de station d'épuration ou encore des sols pollués.

La décomposition de la charge solide est réalisée dans un four par thermolyse ou pyrolyse qui consiste en une décomposition par chauffage de ladite charge en l'absence d'oxygène.
Cette décomposition peut également être réalisée par gazéification en injectant au sein de la charge de la vapeur d'eau et/ou de l'air.

Lors de cette décomposition, il est produit des résidus solides riches en carbone, dénommés coke, et des gaz chauds, appelés gaz bruts, qui présentent un pouvoir calorifique élevé.

Ces gaz bruts contiennent des polluants gazeux comme notamment des composés azotés tels que NH3, HCN, eux-mêmes précurseurs des oxydes d'azote, des gaz acides tels que HCI et H2S, des métaux lourds comme le mercure ou des métaux alcalins. Ces gaz peuvent également contenir des composés organiques lourds à l'état de vapeur appelés goudrons.
Tous ces polluants sont toxiques tant pour l'environnement que pour l'homme. Ces gaz contiennent en outre des polluants solides, tels que des poussières, qui peuvent être rejetés dans l'atmosphère et qui sont également très nuisibles pour la santé humaine.

Cependant, il existe de nombreuses installations visant à récupérer ces poussières avant leur rejet dans l'atmosphère.

La demande de brevet FR-A-2 804 043 décrit un procédé et une installation d'épuration de gaz issus de thermolyse de déchets.

Une installation de ce type est décrite dans la demande de brevet européen EP-A-0076484.

Cette installation comporte un four dans lequel les gaz bruts chauds sont évacués par une conduite vers un séparateur centrifuge, appelé cyclone, qui permet de séparer les poussières présentes dans les gaz bruts par effet de centrifugation.
Ces poussières, une fois séparées des gaz bruts et sous l'effet de la gravité, tombent dans la partie inférieure du cyclone et sont dirigées vers un dispositif d'évacuation, tel qu'un sas, où elles sont stockées pour une utilisation ultérieure.
Les gaz ainsi dépoussiérés sont évacués par la partie haute du cyclone et sont utilisés, comme décrit dans ce document, pour entraîner une turbine à gaz puis sont rejetés dans l'atmosphère.

Dans cette installation, les poussières sont éliminées en très grande partie mais la toxicité des gaz dépoussiérés, qui sont rejetés dans l'atmosphère, n'est pas réduite car ceux-ci contiennent toujours une grande partie de polluants gazeux.
En outre, compte tenu de l'éloignement du cyclone par rapport à la sortie du four, la température des gaz bruts diminue à l'arrivée dans le cyclone, ce qui a pour conséquence la condensation des produits lourds qu'ils contiennent et qui peuvent encrasser et boucher le cyclone.

La présente invention se propose de remédier aux inconvénients énumérés ci-dessus grâce à un procédé et une installation simples et peu coûteux qui permettent non seulement de dépoussiérer les gaz mais également d'éliminer, en totalité ou tout du moins en très grande partie, les polluants gazeux qu'ils renferment.

Suivant l'invention, un procédé de traitement de gaz issus de la décomposition par effet thermique d'une charge solide dans lequel on réalise cette décomposition de la charge solide dans un four, notamment par pyrolyse ou gazéification, cette décomposition générant à la sortie du four des gaz bruts contenant des polluants solides et gazeux, caractérisé en ce qu'on procède, de manière simultanée et à la sortie dudit four, à une opération mécanique de dépoussiérage des gaz et à un traitement chimique desdits gaz.

Avantageusement, on peut utiliser des réactifs pour le traitement chimique des gaz.

On peut également utiliser des additifs pour le traitement chimique des gaz.

Préférentiellement, on peut utiliser des catalyseurs pour le traitement chimique des gaz.

On peut réaliser l'opération de dépoussiérage par centrifugation des gaz bruts.

On peut utiliser les réactifs/additifs pour réaliser une réaction gaz/solide permettant le traitement chimique des gaz ou pour réaliser une réaction gaz/gaz permettant le traitement chimique des gaz.

De manière avantageuse, on peut utiliser des composés basiques pour la réaction gaz/solide ou des composés oxygénés pour réaliser la réaction gaz/gaz.

On peut utiliser un catalyseur pour réaliser une conversion des gaz.

Plus particulièrement, on peut recycler tout ou partie des réactifs/additifs/catalyseurs utilisés pour une réintroduction lors du traitement chimique des gaz.

L'invention concerne également une installation de traitement de gaz issus de la décomposition par effet thermique d'une charge solide comprenant un four de décomposition de la charge, un caisson de récupération des résidus solides et des gaz bruts issus de la décomposition, ledit caisson étant raccordé à une face ouverte dudit four, caractérisée en ce que le caisson loge un dispositif de traitement intégrant des moyens mécaniques de dépoussiérage des gaz et des moyens de traitement chimique desdits gaz.

Le dispositif de traitement peut comporter une enveloppe cylindrique munie d'au moins d'une entrée des gaz bruts et d'au moins une entrée de composés chimiques.

Les entrées peuvent être disposées de manière tangentielle par rapport à l'enveloppe.

Avantageusement, le dispositif de traitement peut être raccordé à un dispositif de recyclage des composés chimiques.

Le dispositif de traitement peut comporter une conduite d'évacuation des gaz après leur traitement.

L'invention sera maintenant explicitée à la lecture de la description qui va suivre, donnée à titre d'exemple, et à laquelle sont annexés des dessins sur lesquels :
- la figure 1 est une vue schématique en coupe partielle montrant l'installation selon l'invention ;
- la figure 2 est une vue en coupe selon la ligne 2-2 de la figure 1.

En se référant aux figures, l'installation comprend un four 10 d'axe longitudinal XX', de préférence un four tournant, qui comprend une enceinte 12, rotative dans le cas d'un four tournant, entourée d'un espace annulaire fermé 14 fixe et alimenté en moyen de chauffage par une voie 16.

Le moyen de chauffage peut être un gaz combustible alimentant une série de brûleurs (non représentés) disposés sous le four et dans la partie basse de l'espace de chauffage ou un fluide à haute température qui remplit cet espace annulaire et qui provient par exemple d'un moyen de combustion du coke comme cela est mieux décrit dans la demande FR-A-2 797 642 publiée au nom du demandeur.

Ce four est alimenté, à l'une de ses extrémités, par une voie d'approvisionnement connue 18 avec une charge solide qui peut comprendre une fraction de matière organique, telle qu'il en existe dans les déchets urbains et/ou industriels ou dans de la biomasse ou dans des boues de station d'épuration.

Cette charge peut éventuellement être traitée, au préalable de son introduction dans le four, par tout moyen connu en soi (broyage, séchage) afin de mettre en adéquation cette charge avec les spécifications de granulométrie et/ou d'humidité du four.

La charge, éventuellement prétraitée, est introduite dans le four 10 par la voie 18 et ressort, après décomposition, par une face ouverte 20 que présente l'autre extrémité de ce four.

C'est à partir de cette face ouverte 20, qu'est raccordé, de manière étanche vis-à-vis de l'extérieur, un caisson de récupération fermé 22 qui contient, dans son volume intérieur, un dispositif de traitement 24 des gaz bruts qui a pour rôle d'être un séparateur des poussières contenues dans ces gaz bruts et, simultanément, un rôle de réacteur chimique pour l'élimination des polluants gazeux présents dans ces gaz.

Ce dispositif de traitement sera dénommé séparateur/réacteur, dans la suite de la description.

Ce caisson de section carré, dans l'exemple illustré ici, présente un axe général YY' sensiblement perpendiculaire à celui du four et comporte, en partie basse, un volume en forme de trémie 26 servant de collecteur pour les résidus solides ou coke et, en partie haute, un couvercle 28.

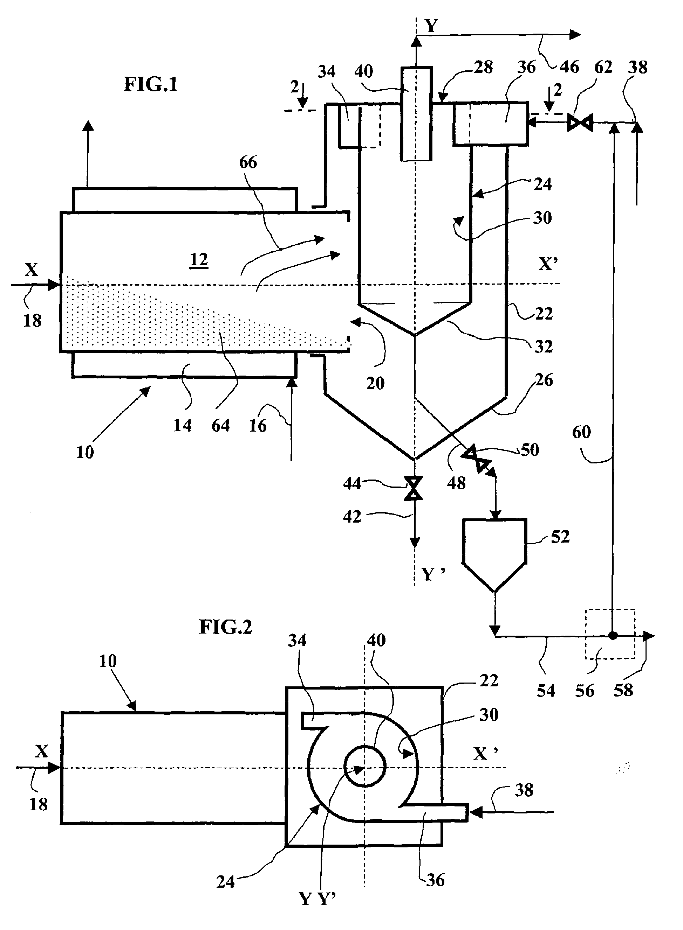

Les termes « partie haute » et « partie basse » employés dans la présente description sont utilisés en relation avec la figure 1 pour designer les éléments respectivement situés en haut et en bas de cette figure.

Dans l'exemple représenté, le séparateur/réacteur 24 est supporté en partie haute du caisson par le couvercle 28 et se compose d'une enveloppe cylindrique circulaire 30, d'axe confondu avec celui du caisson, d'une partie basse en forme de trémie 32 pour la récupération d'au moins des poussières et d'une partie haute comportant au moins une entrée de gaz bruts 34, au moins une entrée de composés chimiques 36, raccordée à une conduite 38, pour le traitement d'élimination des polluants gazeux des gaz bruts, et une conduite d'évacuation 40 des gaz dépoussiérés et traités.

L'entrée 34 met en communication les gaz bruts présents dans le caisson 22 avec l'intérieur du séparateur/réacteur 24 et l'entrée 36 est raccordée à la conduite 38 qui traverse la paroi de ce caisson pour être connectée à une source d'alimentation de composés chimiques qui sont admis dans ce séparateur/réacteur.

Comme mieux visible sur la figure 2, les entrées 34 et 36 sont disposées de manière tangentielle à l'enveloppe 30 de façon à obtenir, sous l'effet de la vitesse de circulation, un mouvement circulaire à grande vitesse des gaz bruts et des composés chimiques de traitement autour de l'axe YY'.

Grâce à cela, les poussières contenues dans les gaz bruts sont séparées mécaniquement de ces gaz par centrifugation et, simultanément, les composés chimiques se mélangent avec les gaz bruts pour les traiter chimiquement. Les gaz bruts ainsi débarrassés des polluants solides et gazeux sont évacués par la conduite 40.

Grâce à cette disposition de séparateur/réacteur 24 à l'intérieur du caisson 22, la séparation mécanique des poussières se produit à la même température que celle de la sortie du four et évite ainsi la condensation de produits lourds, tel que des goudrons.

Bien entendu et cela sans sortir de l'invention, la circulation des gaz bruts et des composés chimiques de traitement peut être à co-courant ou à contre-courant, c'est à dire que, dans le premier cas, les gaz et les composés chimiques circuleront dans le même sens de rotation autour de l'axe YY' alors que, dans l'autre cas, ces gaz et ces composés chimiques circuleront dans des sens de rotation contraires les uns des autres, l'objectif étant d'assuré non seulement une vitesse suffisante des gaz bruts pour la séparation mécanique des particules mais aussi un mélange le plus homogène possible entre les gaz bruts et les composés chimiques.

Le caisson 22 est raccordé à l'extrémité de sa partie basse en forme de trémie 26 à une voie d'évacuation 42 des résidus solides issus de la décomposition de la charge, cette voie pouvant comporter une vanne de régulation 44 ou tout autre moyen permettant de réguler le débit des résidus solides vers le dispositif et/ou l'installation qui est adapté à les recevoir pour les traiter.

La conduite d'évacuation 40 des gaz dépoussiérés et traités est raccordée par une conduite 46 à une installation de récupération des hydrocarbures ou de l'énergie calorifique que contiennent ces gaz.

La partie basse en forme de trémie 32 du séparateur/réacteur 24 est raccordée par une conduite 48, munie éventuellement d'une vanne de régulation de débit 50, à un bac de récupération 52 des poussières et/ou des composés chimiques, cette conduite traversant la paroi du caisson 22.

Les poussières et les composés chimiques récupérés peuvent être soit stockés pour un traitement ultérieur, soit dirigés par une voie 54 vers un dispositif de recyclage 56 dont le rôle essentiel consiste à faire recirculer dans le séparateur/réacteur les composés chimiques qui n'ont pas été totalement utilisés lors d'un précédent passage dans ce séparateur/réacteur.

En effet, les composés chimiques utilisés lors de l'opération d'épuration des polluants gazeux ainsi que leur éventuel excédent sont évacués vers le fond de cette trémie.

De ce fait, le bac de récupération 52 va contenir des poussières, des composés chimiques non utilisés et des composés chimiques ayant absorbés les polluants gazeux.

Comme évoqué ci-dessus, il peut être mis en place un dispositif de recyclage 56 qui va traiter les différents constituants de manière à séparer les poussières des composés chimiques, ces poussières étant évacuées vers un dispositif approprié par la voie 58 et les composés chimiques recyclés étant dirigés par une voie de recyclage 60 vers la conduite d'alimentation 38 du séparateur/réacteur.

A titre d'exemple, ce dispositif de recyclage peut être un séparateur granulométrique, de type tamis, permettant de séparer les composés chimiques de granulométrie grossière des poussières de granulométrie plus fine.

Cette conduite comporte, de manière préférentielle, une vanne de réglage 62 disposée entre l'entrée 36 des composés chimiques et le point de raccordement de la conduite 38 avec la voie de recyclage 60 et ce, afin de réguler le débit desdits composés dans le séparateur/réacteur.

Le fonctionnement de l'installation de traitement de gaz est maintenant explicité en relation avec la figure 1.

La charge (avec ou sans traitement) est introduite par la voie 18 dans l'enceinte 12 du four 10 et progresse, dans le cas d'un four tournant, à l'intérieur de cette enceinte.

Sous l'effet de la chaleur générée par l'espace annulaire de chauffage 14 et transférée à l'intérieur de l'enceinte, cette charge subit une pyrolyse par dégradation thermique en absence d'air.
On peut également dégrader cette charge par gazéification en injectant dans l'enceinte de l'air et/ou de la vapeur d'eau.

Le résultat de cette dégradation thermique se traduit, d'une part, par des résidus solides ou coke 64 qui aboutissent par la face ouverte 20 dans le caisson de récupération 22 et tombent dans la trémie 26 pour être ensuite évacués par la voie 42 et, d'autre part, par des gaz bruts 66 sortant également par cette face ouverte et contenant des polluants solides et gazeux.

Ces gaz bruts, de par leur volatilité, se dirigent vers la partie haute du caisson et pénètrent par l'entrée 34 dans le séparateur/réacteur 24 avec une vitesse moyenne comprise entre 5 et 50 m/s de sorte qu'il se crée un mouvement circulaire de ces gaz autour de l'axe YY' du séparateur/réacteur.

Simultanément, des composés chimiques visant à éliminer les polluants gazeux présents dans ces gaz sont introduits dans l'entrée 36 par la conduite 38 avec une vitesse comprise entre 5 et 50 m/s et, compte tenu de la disposition de cette entrée, se mettent également en mouvement circulaire autour de l'axe YY' en se mélangeant de manière la plus homogène possible avec les gaz bruts.

Les composés chimiques peuvent être des additifs basiques, de manière à ce que le séparateur/réacteur se comporte comme un réacteur pour réaliser une réaction chimique gaz/solide entre les gaz bruts et ces additifs. Ces composés permettent alors de capter les gaz acides présents dans les gaz bruts tels que HCL, SO2, H2S ou HF.

Les composés chimiques peuvent être également des catalyseurs, tels que la dolomie, des métaux alcalins, des carbonates de métaux alcalins ou des catalyseurs à base de nickel, de manière à ce que le séparateur/réacteur se comporte comme un réacteur permettant de réaliser une conversion des gaz bruts, telle qu'un réformage à la vapeur ou un craquage.

Bien entendu et cela sans sortir du cadre de l'invention, il peut être prévu que le séparateur/réacteur puisse réaliser des réactions chimiques de type gaz/gaz en injectant par l'entrée 36 des réactifs comme des composés oxygénés, tels que de la vapeur d'eau, de l'air ou de l'oxygène.

Ainsi, les poussières présentes dans les gaz bruts seront séparées de ceux-ci par l'effet de centrifugation donné par le mouvement circulaire des gaz et simultanément ces gaz seront en contact avec les composés chimiques qui vont réagir avec ceux-ci et les débarrasser des polluants gazeux.

Les gaz traités et dépoussiérés sont ensuite évacués par la conduite d'évacuation 40 alors que les poussières, transportant éventuellement des composés chimiques, ainsi que les composés chimiques utilisés ou en excédent sont évacués vers la trémie 52 par la voie 48 pour être ensuite recyclés par le dispositif de recyclage 56 comme précédemment expliqué.

De par cette installation, on obtiendra des gaz sortant du four qui seront « propres » au sens qu'ils seront dépoussiérés et ne contiendront aucun polluant gazeux ou pour le moins n'en contiendront qu'une infime partie.

La présente invention n'est pas limitée à l'exemple décrit ci-dessus mais englobe toutes variantes.
Notamment, il peut être envisagé de se dispenser du dispositif de recyclage 56 et de réinjecter le contenu du bac 52 directement dans le séparateur/réacteur 24 par les voies 54 et 60 et cela en augmentant le taux d'utilisation de composés chimiques introduits dans ce séparateur/réacteur

## Revendications

1. Procédé de traitement de gaz issus de la décomposition par effet thermique d'une charge solide dans lequel on réalise cette décomposition de la charge solide dans un four, notamment par pyrolyse ou gazéification, cette décomposition générant à la sortie du four des gaz bruts contenant des polluants solides et gazeux, **caractérisé en ce qu'**on procède, de manière simultanée et à la sortie dudit four, à une opération mécanique de dépoussiérage des gaz et à un traitement chimique desdits gaz.

2. Procédé selon la revendication 1, **caractérisé en ce qu'**on utilise des réactifs pour le traitement chimique des gaz.

3. Procédé selon la revendication 1, **caractérisé en ce qu'**on utilise des additifs pour le traitement chimique des gaz.

4. Procédé selon la revendication 1, **caractérisé en ce qu'**on utilise des catalyseurs pour le traitement chimique des gaz.

5. Procédé selon la revendication 1, **caractérisé en ce qu'**on réalise l'opération de dépoussiérage par centrifugation des gaz bruts.

6. Procédé selon l'un des revendications 1 à 3, **caractérisé en ce qu'**on utilise les réactifs/additifs pour réaliser une réaction gaz/solide permettant le traitement chimique des gaz.

7. Procédé selon l'une des revendications 1 à 3, **caractérisé en ce qu'**on utilise les réactifs/additifs pour réaliser une réaction gaz/gaz permettant le traitement chimique des gaz.

8. Procédé selon la revendication 6, **caractérisé en ce qu'**on utilise des composés basiques pour la réaction gaz/solide.

9. Procédé selon la revendication 7, **caractérisé en ce qu'**on utilise des composés oxygénés pour réaliser la réaction gaz/gaz.

10. Procédé selon la revendication 4, **caractérisé en ce qu'**on utilise un catalyseur pour réaliser une conversion des gaz.

11. Procédé selon l'une des revendications 1 à 3, **caractérisé en ce qu'**on recycle tout ou partie des réactifs/additifs/catalyseurs utilisés pour une réintroduction lors du traitement chimique des gaz.

12. Installation de traitement de gaz issus de la décomposition par effet thermique d'une charge solide comprenant un four de décomposition (10) de la charge, un caisson de récupération (22) des résidus solides et des gaz bruts issus de la décomposition, ledit caisson étant raccordé à une face ouverte (20) dudit four, **caractérisée en ce que** le caisson (22) loge un dispositif de traitement (24) intégrant des moyens mécaniques de dépoussiérage des gaz et des moyens de traitement chimique desdits gaz.

13. Installation selon la revendication 12, **caractérisée en ce que** le dispositif de traitement (24) comporte une enveloppe cylindrique (30) munie d'au moins d'une entrée (34) des gaz bruts et d'au moins une entrée (36) de composés chimiques.

14. Installation selon la revendication 13, **caractérisée en ce que** les entrées (34, 36) sont disposées de manière tangentielle par rapport à l'enveloppe (30).

15. Installation selon l'une des revendications 12 à 14, **caractérisée en ce que** le dispositif de traitement (24) est raccordé à un dispositif de recyclage (56) des composés chimiques.

16. Installation selon l'une des revendications 12 à 15, **caractérisé en ce que** le dispositif de traitement (24) comporte une conduite d'évacuation (40) des gaz après leur traitement.

## Claims

1. Method for treatment of gases produced by thermal decomposition of a solid charge in which this decomposition of the solid charge is carried out in a furnace, notably by pyrolysis or gasification, this decomposition generating raw gases containing solid and gaseous pollutants at the outlet of the furnace, ***characterised in that*** at the outlet of said furnace the gases are simultaneously subjected to a mechanical dust-removal operation and to a chemical treatment.

2. Method according to claim 1, ***characterised in that*** reagents are used for the chemical treatment of the gases.

3. Method according to claim 1, ***characterised in that*** additives are used for the chemical treatment of the gases.

4. Method according to claim 1, ***characterised in that*** catalysts are used for the chemical treatment of the gases.

5. Method according to claim 1, ***characterised in that*** the dust removal operation is carried out by centrifuging the raw gases.

6. Method according to one of claims 1 to 3, ***characterised in that*** the reagents/additives are used to produce a gas/solid reaction permitting the chemical treatment of the gases.

7. Method according to one of claims 1 to 3, ***characterised in that*** the reagents/additives are used to produce a gas/gas reaction permitting the chemical treatment of the gases.

8. Method according to claim 6, ***characterised in that*** basic compounds are used for the gas/solid reaction.

9. Method according to claim 7, ***characterised in that*** oxygenated compounds are used to produce the gas/gas reaction.

10. Method according to claim 4, ***characterised in that*** a catalyst is used to produce a conversion of the gases.

11. Method according to one of claims 1 to 3, ***characterised in that*** all or part of the reagents/additives/catalysts used are recycled for reintroduction at the time of the chemical treatment of the gases.

12. Installation for treatment of gases produced by thermal decomposition of a solid charge comprising a furnace (10) for decomposition of the charge, a tank (22) for recovery of the solid residues and raw gases produced by the decomposition, said tank being connected to an open face (20) of said furnace, ***characterised in that*** the tank (22) accommodates a treatment device (24) incorporating mechanical means for removal of dust from the gases and means for chemical treatment of said gases.

13. Installation according to claim 12, ***characterised in that*** the treatment device (24) comprises a cylindrical envelope (30) provided with at least one inlet (34) for the raw gases and at least one inlet (36) for chemical compounds.

14. Installation according to claim 13, ***characterised in that*** the inlets (34, 36) are disposed tangentially in relation to the envelope (30).

15. Installation according to one of claims 12 to 14, ***characterised in that*** the treatment device (24) is connected to a device (56) for recycling the chemical compounds.

16. Installation according to one of claims 12 to 15, ***characterised in that*** the treatment device (24) comprises a pipe (40) for discharging the gases after their treatment.

## Patentansprüche

1. Verfahren zum Behandeln von Gasen, die aus der Zersetzung durch Wärmeeffekt einer soliden Charge hervorgehen, bei dem man diese Zersetzung der soliden Charge in einem Ofen durchführt, insbesondere durch Pyrolyse oder Vergasung, wobei diese Zersetzung am Ausgang des Ofens Rohgase erzeugt, die feste und gasförmige Schadstoffe enthalten, **dadurch gekennzeichnet, dass** man gleichzeitig am Ausgang des Ofens einen mechanischen Entstaubungsvorgang der Gase und eine chemische Behandlung der Gase durchführt.

2. Verfahren nach Anspruch 1, **dadurch gekennzeichnet, dass** man Reagenzien zur chemischen Behandlung der Gase verwendet.

3. Verfahren nach Anspruch 1, **dadurch gekennzeichnet, dass** man Zusatzstoffe zur chemischen Behandlung der Gase verwendet.

4. Vorrichtung nach Anspruch 1, **dadurch gekennzeichnet, dass** man Katalysatoren zur chemischen Behandlung der Gase verwendet.

5. Verfahren nach Anspruch 1, **dadurch gekennzeichnet, dass** man den Entstaubungsvorgang durch Zentrifugieren der Rohgase durchführt.

6. Verfahren nach einem der Ansprüche 1 bis 3, **dadurch gekennzeichnet, dass** man die Reagenzien/Zusatzstoffe verwendet, um eine Gas-/Feststoffreaktion durchzuführen, die die chemische Behandlung der Gase erlaubt.

7. Verfahren nach einem der Ansprüche 1 bis 3, **dadurch gekennzeichnet, dass** man Reagenzien/Zusatzstoffe verwendet, um eine Gas-/Gasreaktion durchzuführen, die die chemische Behandlung der Gase erlaubt.

8. Verfahren nach Anspruch 6, **dadurch gekennzeichnet, dass** man basische Verbindungen für die Gas-/Feststoffreaktion verwendet.

9. Verfahren nach Anspruch 7, **dadurch gekennzeichnet, dass** man sauerstoffhaltige Verbindungen verwendet, um die Gas-/Gasreaktion durchzuführen.

10. Verfahren nach Anspruch 4, **dadurch gekennzeichnet, dass** man einen Katalysator verwendet, um eine Umwandlung der Gase durchzuführen.

11. Verfahren nach einem der Ansprüche 1 bis 3, **dadurch gekennzeichnet, dass** man einen Teil oder alle Reagenzien/Zusatzstoffe/Katalysatoren, die verwendet werden, zu einem Wiedereinführen bei der chemischen Behandlung der Gase zurückführt.

12. Anlage zum Behandeln von Gasen, die aus der Zersetzung durch Wärmeeffekt einer Feststoffcharge hervorgehen, umfassend einen Ofen (10) zum Zersetzen der Charge, einen Auffangbehälter (22) der Feststoffreststoffe und der Rohgase, die aus der Zersetzung hervorgehen, wobei der Behälter an einer offenen Seite (20) des Ofens angeschlossen ist, **dadurch gekennzeichnet, dass** der Behälter (22) eine Behandlungsvorrichtung (24) aufnimmt, die mechanische Mittel zum Entstauben der Gase und Mittel zur chemischen Behandlung der Gase enthält.

13. Anlage nach Anspruch 12, **dadurch gekennzeichnet, dass** die Behandlungsvorrichtung (24) einen zylindrischen Mantel (30) aufweist, der mit mindestens einem Eingang (34) der Rohgase und mit mindestens einem Eingang (36) der chemischen Verbindungen versehen ist.

14. Anlage nach Anspruch 13, **dadurch gekennzeichnet, dass** die Eingänge (34, 36) tangenzial in Bezug auf den Mantel (30) angeordnet sind.

15. Anlage nach einem der Ansprüche 12 bis 14, **dadurch gekennzeichnet, dass** die Behandlungsvorrichtung (24) an eine Recyclingvorrichtung (56) der chemischen Verbindungen angeschlossen ist.

16. Anlage nach einem der Ansprüche 12 bis 15, **dadurch gekennzeichnet, dass** die Behandlungsvorrichtung (24) eine Ableitung (40) der Gase nach ihrer Behandlung aufweist.
